# EUROPEAN PATENT SPECIFICATION

(11) **EP 1 008 846 B1**
(45) Date of publication and mention of the grant of the patent: **06.04.2005**
(21) Application number: 99309990.2
(22) Date of filing: 10.12.1999
(51) Int. Cl.: G01N 21/89, G01N 21/88

(54) **Machine vision system and tile inspection apparatus incorporating such a system**
Automatisches Bildverarbeitungssystem und Ziegelprüfgerät mit einem solchen System
Système de vision artificiel et appareil d'inspection des tuiles utilisant un tel système

(30) Priority: 11.12.1998 GB 9827377
(43) Date of publication of application: 14.06.2000
(73) Proprietor: Surface Inspection Limited, St. Philips, Bristol BS2 OJZ (GB)
(72) Inventor: Coulthard, Martin, c/o Surface Inspection Limited, St Philips, Bristol BS2 0JZ (GB)
(74) Representative: Beck, Simon Antony

(56) References cited:
- WO-A-95/18952
- WO-A-98/01746
- WO-A-98/34096
- US-A- 5 699 148
- US-A- 5 734 172
- US-A- 5 753 903
- US-A- 5 821 527

## Description

The present invention relates to a machine vision system and to a tile inspection apparatus incorporating such a machine vision system.

Known tile inspection systems use one or more lamps to illuminate tiles within an inspection area. Typically a fluorescent lamp is disposed within an enclosure which serves to shield the item under inspection from illumination by ambient light. One or more cameras are then arranged to view the item under inspection, and the images from the cameras may be displayed to a human operator or may be subjected to automated processing in order to provide a measurement that the item under inspection complies with predefined manufacturing tolerances relating to surface blemishes and/or variations in shade or colour.

It has been recognised that machine vision systems may drift with time. The light intensity, and indeed colour, of the light emitted from a fluorescent tube varies with both the temperature of the fluorescent tube and the temperature of its power supply, as the supply voltage will tend to drift with operating temperature. In order to mitigate this problem, it is known to provide a photo-detector - such as a photocell, adjacent the fluorescent tube and to use this in a closed loop feedback system involving the tube power supply in order to hold the light intensity provided by the fluorescent tube at a substantially constant value. However, this does not ensure that the measurements made by the vision system are accurate since the response of the photocell can drift with temperature and the response of the cameras used in the vision system can also drift with temperature. In order to try to compensate for these changes of system performance, some manufacturers of machine vision systems provide a reference surface. In use, the machine operator is expected to halt the production line at predetermined intervals (typically every hour) and to pass the reference surface through the machine vision system. The system may then perform a self calibration routine, or alternatively, the performance of the vision system may be adjusted by an operator.

WO98/34096 describes a method and system for detecting defects in transparent objects such as CRT shadowmasks. The object is positioned between a light source and a camera, and the camera examines the object. The light source may be calibrated by using a known good object and monitoring the light source through the object with the camera.

US 5,753,903 and US 5,669,148 both describe systems where a dedicated light intensity monitoring device monitors a light source, and the light source is corrected if necessary using feedback loops. Light is directed to the monitoring deivce via an optical fibre or a beam splitter.

WO95/18952 describes a system for monitoring light scattered off a rough surface of a material. An area camera may be used as a plurality of line scan cameras.

According to a first aspect of the present invention, there is provided a machine vision system for automatically inspecting items, the machine vision system comprising at least one light source, and at least one camera wherein the light source illuminates a surface to be inspected, the at least one camera views the surface to be inspected characterised in that a further optical path is provided such that at least one of the cameras views the at least one light source in order to monitor its output, and also views the surface to be inspected.

It is thus possible to provide a machine vision system wherein the combined performance of the light source and camera system can be monitored on a substantially continuous basis.

Preferably the vision system comprises a first camera to view one of the diffusely scattered and specularly reflected light from the surface. Advantageously the vision system further comprises a second camera to view the other one of the diffusely scattered and specularly reflected light from the surface under inspection.

Various camera combinations may be used. Thus the or each camera may be an area camera, or a line scan camera. Where are multiple cameras are provided, some of the cameras may be area cameras, and others of the cameras may be line scan cameras. Line scan cameras are preferred for viewing items at an oblique angle as issues of perspective do not arise where only a single line of an image is captured, rather than an area view. Bandscan cameras may also be used.

In vision systems employing only line scan cameras, it is particularly difficult for the camera to simultaneously view the item being inspected and the light source. Thus, in such systems, the further optical path may advantageously be provided by a light guide, such as a fibre optic cable. A first end of the cable may be arranged to collect light from a first portion of the light source, and a second end of the cable may be arranged to illuminate the photo detectors at one end of the line scan camera detector array. This can be done by placing the second end of the fibre optic cable close to and directed at the camera lens. The first end of the fibre optic cable may be arranged to view a central portion of a fluorescent tube within the light source. This is preferred to viewing light emanating from an end of the tube since both the colour and intensity of the light can vary between that originating from the centre of the fluorescent tube and that from the end of the tube.

As an alternative to the use of a fibre optic light guide, mirrors may be used to direct part of the light emanating from the light source directly to a portion of the detector array within the camera. However, it will be appreciated that such an approach may also require collimators in order to accurately define the width of the light beam.

Where one of the cameras is an area camera, the camera can be arranged to simultaneously view the item under test and the light source.

The present invention will further be described, by way of example, with reference to the accompanying drawings, in which:
Figure 1 schematically illustrates a tile inspection apparatus including a machine vision system constituting an embodiment of the present invention; and
Figure 2 schematically illustrates a band scan camera constituting and embodiment of the present invention.

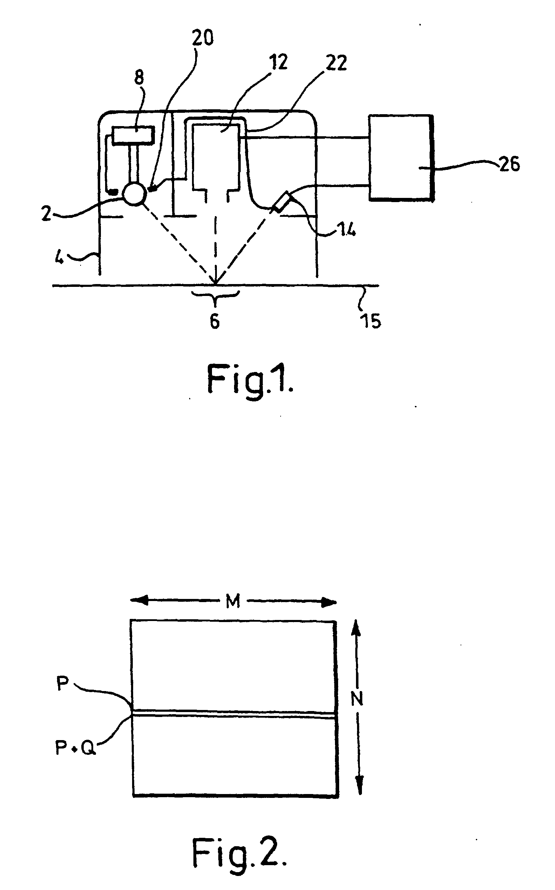

A tile inspection apparatus is schematically illustrated in figure 1. The apparatus comprises a fluorescent light source 2 positioned inside an enclosure 4 which serves to exclude ambient light from entering an inspection region, generally indicated at 6. The fluorescent light source is connected to an adjustable power supply 8. A photo-detector 10 is positioned adjacent the light source 2 and provides a signal indicative of the intensity of the light source to the power supply 8 in order that the intensity of the light source can be controlled in a closed loop manner. The light source 2 is partitioned from first and second cameras 12 and 14 which are arranged to collect diffusely and specularly reflected light from the inspection region, respectively. Tiles are conveyed to and from the inspection region 6 by a conveyor 15 which runs continuously.

The fluorescent light and power supply controller are held within a chamber which is forcibly air cooled. Whilst this helps to maintain the temperature of the photo detector 10 and the power supply broadly constant, it does not guarantee that these components will remain within a sufficiently tightly controlled temperature range such that drift is insignificant.

A first end 20 of an optical fibre 22 is positioned adjacent a central portion of the fluorescent tube 2 and faces towards the tube in order to collect light therefrom. The optical fibre 22 delivers the light to one end of the detector array of the line scan camera 14. In order to achieve this, the second end of the fibre is positioned in the field of view on the line scan camera, facing towards the camera. Thus fluctuations caused by drift in the output of the fluorescent light 2 or in the response of the line scan camera can be continuously monitored by a data processor 26. The data processor also receives an output from the area camera 12.

As a result of this arrangement, the light intensity, and in the case of colour vision systems, colour response, can be monitored on a continuous basis.

As mentioned hereinabove, line scan cameras offer optical solutions which are advantageous in the field of machine vision systems, namely that perspective effects are not introduced into the system. However, area cameras are used more commonly throughout industry, and as a consequence of mass production are less expensive than line scan cameras.

As shown in figure 2, an area camera has a two dimensional array of picture elements. The array typically has M elements in a first direction and N elements in a second direction. For broadcast cameras, M and N are typically equal to 840 and 625, respectively. A line scan camera can be fabricated from an area camera by only selecting the data from one of the lines of the camera, for example a Pth line. However, true line scan cameras exhibit read rates greatly in excess of the frame rates possessed by area cameras. Thus, in the context of a machine vision system in which items to be inspected are presented on a conveyor belt, the conveyor belt speed would need to be drastically reduced in order to use an area camera as a line scan camera. However, by using an area camera to view a narrow band, defined between the Pth and P+Qth lines of an area camera its is possible to use an area camera to capture views similar to that which would be obtained from a line camera, and to use the multiple lines within the narrow band to capture multiple line views such that the speed of throughput through the machine vision system does not become compromised. The above description has, for brevity, ignored the fact that the area cameras may provide interlaced images. However, this does not provide a significant problem to the use of an area camera as a band scan camera. Where the camera is used to view items travelling on a conveyor, the width of the band is selected to be at least equal to the distance travelled by the conveyor during the time between scans in order to ensure that the entirety of the surface under inspection is viewed.

Furthermore, where only a narrow band of the area camera is being used to capture image data, the remaining bands may be used for other purposes. Such other uses may include capturing alternative views of the item under inspection, or monitoring the light emanating from the light source. The camera may be arranged to view the light source directly. In such an arrangement, the full length of the light source can be monitored as can the response of a full line of the camera.

It is thus possible to provide an arrangement in which the combined drift resulting from the light source and a camera can be monitored on a substantially continuous basis. Furthermore, it is also possible to provide the functionality of a line scan camera using a slower and cheaper area camera.

## Claims

1. A machine vision system for automatically inspecting items, the machine vision system comprising at least one light source (2), and at least one camera (12, 14) wherein the light source illuminates a surface (6) to be inspected, the at least one camera views the surface to be inspected **characterised in that** a further optical path (22) is provided such that at least one of the cameras receives light from the at least one light source in order to monitor its output, whilst it also views the surface to be inspected.

2. A machine vision system as claimed in claim 1, **characterised by** a camera (12) arranged to view diffusely scattered light from the surface (6).

3. A machine vision system as claimed in claim 1 or 2 **characterised by** a camera (14) arranged to view light specularly reflected from the surface (6).

4. A machine vision system as claimed in any one of the preceding claims, **characterised in that** the cameras are linescan cameras, area cameras or bandscan cameras.

5. A machine vision system as claimed in any one of the preceding claims, **characterised in that** the further optical path is provided by a light guide (22).

6. A machine vision system as claimed in claim 5, **characterised in that** the light guide (22) is a fibre optic cable, a first end of which is arranged to collect light from a portion of the light source and a second end of which is arranged to illuminate part of a detector array of a camera.

7. A machine vision system as claimed in any one of claims 1 to 4, **characterised in that** the optical path utilises mirrors to direct light to the at least one camera.

8. A machine vision system as claimed in any one of the preceding claims, **characterised in that** one of the cameras is an area camera and is arranged to simultaneously view the item under test and the light source (2).

## Patentansprüche

1. Bildverarbeitungssystem zum automatischen Prüfen von Gegenständen, wobei das Bildverarbeitungssystem wenigstens eine Lichtquelle (2), und wenigstens eine Kamera (12, 14) aufweist, wobei die Lichtquelle eine zu prüfende Oberfläche (6) beleuchtet, die wenigstens eine Kamera die zu prüfende Oberfläche betrachtet, **gekennzeichnet dadurch, dass** ein weiterer optischer Pfad (22) vorgesehen ist, so dass wenigstens eine der Kameras Licht von der wenigstens einen Lichtquelle zum Überwachen ihrer Ausgabe empfängt, während sie auch die zu prüfende Oberfläche betrachtet.

2. Bildverarbeitungssystem gemäß Anspruch 1, **gekennzeichnet durch** eine Kamera (12), die eingerichtet ist, um von der Oberfläche (6) diffus gestreutes Licht zu betrachten.

3. Bildverarbeitungssystem gemäß Anspruch 1 oder 2, **gekennzeichnet durch** eine Kamera (14), die eingerichtet ist, um von der Oberfläche (6) spiegelnd reflektiertes Licht zu betrachten.

4. Bildverarbeitungssystem gemäß einem der vorherigen Ansprüche, **gekennzeichnet dadurch, dass** die Kameras Zeilenkameras, Flächenkameras oder Band-Abtast-Kameras sind.

5. Bildverarbeitungssystem gemäß einem der vorherigen Ansprüche, **gekennzeichnet dadurch, dass** der weitere optische Pfad von einem Lichtleiter (22) bereitgestellt ist.

6. Bildverarbeitungssystem gemäß Anspruch 5, **gekennzeichnet dadurch, dass** der Lichtleiter (22) ein Fiberoptik-Kabel ist, wobei ein erstes Ende davon eingerichtet ist, um Licht von einem Bereich der Lichtquelle zu sammeln, und ein zweites Ende davon eingerichtet ist, um einen Teil einer Detektormatrix einer Kamera zu beleuchten.

7. Bildverarbeitungssystem gemäß einem der Ansprüch 1 bis 4, **gekennzeichnet dadurch, dass** in dem optischen Pfad Spiegel verwendet sind, zum Richten von Licht auf die wenigstens eine Kamera.

8. Bildverarbeitungssystem gemäß einem der vorherigen Ansprüche, **gekennzeichnet dadurch, dass** eine der Kameras eine Flächenkamera ist und zum gleichzeitigen Betrachten des zu testenden Gegenstands und der Lichtquelle (2) eingerichtet ist.

## Revendications

1. Système de vision mécanique destiné à l'inspection automatique d'objets, le système de vision mécanique comprenant au moins une source lumineuse (2) et au moins une caméra (12, 14), la source lumineuse éclairant une surface (6) à inspecter, l'au moins une caméra voyant la surface à inspecter, **caractérisé en ce qu'**il est prévu un chemin optique additionnel (22) de telle manière qu'au moins une des caméras reçoive de la lumière de l'au moins une source lumineuse afin de surveiller sa sortie et pendant qu'elle voit aussi la surface à inspecter.

2. Système de vision mécanique selon la revendication 1, **caractérisé par** une caméra (12) agencée pour voir de la lumière dispersée avec diffusion en provenance de la surface (6).

3. Système de vision mécanique selon la revendication 1 ou 2, **caractérisé par** une caméra (14) agencée pour voir de la lumière réfléchie spéculairement en provenance de la surface (6).

4. Système de vision mécanique selon une quelconque des revendications précédentes, **caractérisé en ce que** les caméras sont des caméras à exploration linéaire, des caméras à surface ou des caméras à exploration par bandes.

5. Système de vision mécanique selon une quelconque des revendications précédentes, **caractérisé en ce que** le chemin optique additionnel est formé par un guide de lumière (22).

6. Système de vision mécanique selon la revendication 5, **caractérisé en ce que** le guide de lumière (22) est un câble à fibre optique dont une première extrémité est agencée pour collecter de la lumière en provenance d'une partie de la source lumineuse et dont une deuxième extrémité est agencée pour éclairer une partie d'un groupement de détecteurs d'une caméra.

7. Système de vision mécanique selon une quelconque des revendications 1 à 4, **caractérisé en ce que** le chemin optique utilise des miroirs pour diriger la lumière vers l'au moins une caméra.

8. Système de vision mécanique selon une quelconque des revendications précédentes, **caractérisé en ce qu'**une des caméras est une caméra à surface et est agencée pour voir simultanément l'objet étudié et la source lumineuse (2).
